# EUROPEAN PATENT APPLICATION

(11) **EP 2 670 026 A1**
(43) Date of publication of application: **04.12.2013**
(21) Application number: 12170531.3
(22) Date of filing: 01.06.2012
(51) Int. Cl.: H02K 1/20, H02K 7/18

(54) **Spacer-less air duct**

(71) Applicant: Siemens Aktiengesellschaft, 80333 München (DE)
(72) Inventor: Soerensen, Peter Hessellund, 8740 Brædstrup (DK); Airoldi, Giovanni, 7100 Vejle (DK)

(57) **Abstract**

The present invention relates to a stator stack (100, 110) for a stator (120) of a generator, in particular a generator for a wind turbine. The stator stack (100, 110) comprises a first lamination sheet (101), a second lamination sheet (102) and a first intermediate lamination sheet (103). The first lamination sheet (101), the first intermediate lamination sheet (103) and the second lamination sheet (102) are attached adjacent to each other along an axial direction of the generator, wherein the first intermediate lamination sheet (103) is arranged between the first lamination sheet (101) and the second lamination sheet (102). The first intermediate lamination sheet (103) comprises a first cut-out (201) for forming a cooling channel (105, 105',105") between the first lamination sheet (101) and the second lamination sheet (102) such that a cooling fluid is guidable through the cooling channel (105, 105', 105").

## Description

### Field of invention

The present invention relates to a stator stack for a stator of a generator, in particular a generator for a wind turbine. Furthermore, the present invention relates to a method of operating a generator, in particular a generator for a wind turbine.

### Art Background

In generators for wind turbines, heat is generated when transferring mechanical energy in electrical energy. Heat is generated in particular in windings of a stator of the generator. The generated heat has to be removed in order to avoid hotspots.

The stator and its windings are generally cooled by blowing air inside the stator, e.g. by blowing air through the windings and through an air gap between a rotor of the generator and the stator or through radial extending ducts within the stator.

The stator housing may consist of a plurality of stator lamination sheets which are attached one after another along the axial direction of the stator and form a stator stack of the stator. Spacers are welded between two laminated sheets in order to form ducts between the two adjacent laminated sheets, so that cooling fluid may stream through the duct along a generally radial direction of the generator.

Due to the ducts in the stator stacks and due to the cooling fluid streaming through the ducts, heat dissipated in the stator may be transferred to the cooling fluid and may be transported away from the stator.

### Summary of the Invention

It may be an object of the present invention to provide a stator for a generator which is simple to manufacture and which comprises a proper heat management.

This object is solved by a stator stack for a stator of a generator, by a stator for a generator and by a method of operating a generator comprising a stator.

According to a first aspect of the present invention, a stator stack for a stator of a generator, in particular a generator for a wind turbine, is presented. The stator stack comprises a first lamination sheet, a second lamination sheet and a first intermediate lamination sheet. The first lamination sheet, the first intermediate lamination sheet and the second lamination sheet are attached adjacent to each other along an axial direction of the generator. The first intermediate lamination sheet is arranged between the first lamination sheet and the second lamination sheet. The intermediate lamination sheet comprises a first cut-out for forming a cooling channel between the first lamination sheet and the second lamination sheet such that a cooling fluid is guidable through the cooling channel.

According to a further aspect of the present invention, a stator for a generator, in particular a generator for a wind turbine, is presented. The stator comprises a first stator stack, which is a stator stack as described above. Furthermore, the stator comprises a second stator stack. The first stator stack and the second stator stack are arranged one after another along the axial direction of the generator. Furthermore, the stator comprises a tightening bar to which the first stator stack and the second stator stack are arranged. The first stator stack and the second stator stack are tightened together by the tightening bar.

According to a further aspect of the present invention, a method of operating a generator comprising the above-described stator is presented. According to the method, a cooling fluid is guided through the cooling channel of the stator stack which is formed by the first cut-out of the intermediate lamination sheet.

A generator, and in particular a wind turbine generator, comprises a rotor and a stator to which generally the stator windings are attached. In wind turbine technology, the rotor is coupled to a hub and the wind turbine blades, respectively, of the wind turbine. The wind attacking the wind turbine blades forces a rotation of the rotor around the stator in order to thereby generate electricity. In wind turbine technology, a so-called direct drive technology for the wind turbine generators may be applied, wherein the stator is an inner stator which is surrounded by an outer rotor. Alternatively, in another exemplary embodiment, the generator is an outer stator which may enveloped an inner rotor.

Generally, the stator windings are attached to a radially inner surface or a radially outer surface of the stator. In particular, the stator windings are attached to the stator surface which faces the rotor. The respective surface of the stator, to which the stator windings are attached, may comprise fins, wherein the windings are attached between two adjacent fins in a recess formed by the two adjacent fins. Hence, the stator windings may be embedded into the stator surface.
An axial direction of the generator denotes in the following a direction which is parallel with a rotary axis of the rotor of the generator. A radial direction denotes a direction perpendicular to the rotary axis, wherein the radial direction runs through the rotary axis. A circumferential direction denotes a direction around the rotary axis.

A stator is formed out of stator stacks comprising a plurality of lamination sheets. The lamination sheets are attached adjacent to each other along an axial direction for forming the stator stack. Each lamination sheet is laminated and thus electrically isolated from the adjacent lamination sheet in order to prevent for example Eddy current between the lamination sheets.

The lamination sheets may have a ring-shaped profile for forming a ring-shaped stator stack. Alternatively, the lamination sheet may comprise a half ring profile, a quarter ring profile or some smaller ring profiles. Hence, in order to form a ring shaped stator, a plurality of stator stacks are arranged and attached adjacent to each other along a circumferential direction until a closed ring-shaped profile of the stator is formed.

The tightening bar may be formed as a beam which runs generally along the axial direction. At the end of the tightening bar respective end plates may be attached. The respective lamination sheets and intermediate lamination sheets of the first stator stack and of the second stator stack may be pressed together along the axial direction by the tightening bar.

According to the present invention, the first lamination sheet and the second lamination sheet are homogeneously formed standard lamination sheets which comprise for example a homogeneous surface and which do not comprise attachments or other elements for forming a cooling channel or the like. Between the first lamination sheet and the second lamination sheet the first and/or second intermediate lamination sheet is interposed. The first intermediate lamination sheet comprises a first cut-out by which the cooling channel for guiding the cooling fluid (such as cooling air) is formed. In comparison to conventional approaches, where additionally welded spacers have to be applied between two standard sheets, the intermediate lamination sheets comprising the respective cut-outs are applied by the inventive approach.

By the cut-out, a groove, e.g. with a U-shaped or V-shaped profile, or a through-hole may be denoted. Hence, if the first intermediate lamination sheet is covered by the first lamination sheet on the one side and by the second lamination sheet on the other side, a space, i.e. a cooling channel, is still formed by the first cut-out, so that the cooling fluid may flow through the cooling channel formed by the first cut-out. In other words, the cooling channel may be enveloped by the first and/or the second lamination sheet and the first intermediate lamination sheet. Further provisions, such as welded spacers between two adjacent lamination sheets are not necessary, because the cooling channel is formed by the cut-out of the first intermediate lamination sheet.

By forming the cooling channels (cut-outs) directly in the intermediate lamination sheets, the use of welded spacers may be obsolete. The intermediate lamination sheets which have the defined cut-outs comprise a higher electromagnetic performance than spacers and in particular non-laminated spacers. Furthermore, the stiffness of the stator may be enhanced because the contact areas between the intermediate lamination sheets and the adjacent regularly shaped lamination sheets are larger in comparison to spacers attached between the lamination sheets. Rather than using conventional spacers to keep the lamination sheets apart, the cooling channel constituting air ducts are obtained directly into suitable intermediate lamination sheets comprising the customized cut-outs.

Furthermore, the cooling channels which are formed by the cut-outs may comprise a more flexible and a more variable run and diameter, because the cut-outs in the intermediate lamination sheet may be simpler to manufacture in comparison to complex welded spacers. Because of the more flexible run of the cooling channels and the higher stiffness by using the above proposed stator stack according to the present invention also an increase in the lamination area exposed to the cooling fluid may be obtained. Hence, a higher heat transfer to the air may be achieved and hence the temperature of the stator may be cooled more efficiently.

According to a further exemplary embodiment, the first intermediate lamination sheet comprises a plurality of first cut-outs for forming a plurality of respective cooling channels such that the cooling fluid is guidable through each of the plurality of respective cooling channels.

For example, the cut-outs of the first intermediate lamination sheet may form a plurality of grooves or slits so that the plurality of cooling channels is formed. Hence, a higher flow volume of cooling fluid through the stator stack is generated and hence the cooling capacity is increased. Furthermore, a stator stack comprising an intermediate lamination sheet with the plurality of cooling channels has a higher stability than a stator stack comprising one larger cooling channel of the same volume as the total volume of the plurality of cooling channels.

According to a further exemplary embodiment, the first cut-out is formed such that a flow diameter at a first cross-section of the cooling channel differs to a further flow diameter at a second cross-section of the cooling channel. The first cross-section is spaced from the second cross-section. The flow diameter denotes e.g. the hydraulic diameter of the cooling channel. For example, the flow diameter at the first cross-section may be smaller than the further flow diameter of the second cross-section of the cooling channel. Hence, by the smaller flow diameter of the first cross-section, a nozzle or a diffuser (dependent on the flow direction of the cooling fluid in the cooling channel) is formed. In particular, due to the varying cross-sections a pressure drop caused by a sudden expansion at the opening of the cooling channel may be reduced.

According to a further exemplary embodiment, the stator stack further comprises a second intermediate lamination sheet. The second intermediate lamination sheet is arranged between a) the first intermediate lamination sheet on the one side and b) the first lamination sheet or the second lamination sheet on the other side. In other words, along the axial direction the first lamination sheet, the first intermediate lamination sheet, the second intermediate lamination sheet and the second lamination sheet may be arranged one after another.

In particular, according to a further exemplary embodiment, the second intermediate lamination sheet may comprise a second cut-out for forming the cooling channel such that the cooling fluid is guidable through the cooling channel.

For example, if the first intermediate lamination sheet and the second intermediate lamination sheet are arranged one after another along the axial direction, the cooling channel may be formed partially along an axial direction between the first cut-out and the second cut-out. Hence, by providing a fluidic coupling of the first cut-out and the second cut-out of the respective intermediate lamination sheets, a more flexible and variable run of the cooling channel may be provided. Moreover, if the first cut-out aligns with the second cut-out, a larger volume of the cooling channel may be achieved. For example, the height of the cooling channel may have the height of the sum of the thickness of the first and second intermediate lamination sheets. Hence, the height of the cooling channel may be twice the height of the first or second intermediate lamination sheet.

The second cut-out may comprise the same (geometrical) characteristics as the first cut-out. The second cut-out may be for example a groove or a through-hole formed within the second intermediate lamination sheet. The second cut-out may be a groove, e.g. with a U-shaped or V-shaped profile, or a through-hole. Furthermore, the first cut-out and the second cut-out may form together the respective flow diameter at the first cross-section of the cooling channel and the respective further flow diameter at the second cross-section of the cooling channel.

According to a further exemplary embodiment, the second intermediate lamination sheet comprises a further second cut-out for forming a further cooling channel such that the further cooling fluid is guidable through the cooling channel.

Hence, by the described exemplary embodiments, the further cooling channel is formed by the further second cut-out, wherein the further cooling channel is separated and isolated from the cooling channel formed by the first cut-out and the second cut-out. Hence, a further cooling fluid may be separated from the cooling fluid flowing through the cooling channel.

According to a further exemplary embodiment, the first stator stack has a radially outer surface and a radially inner surface. The first cut-out and/or the second cut-out for forming the cooling channel is formed in such a way that the cooling fluid is guidable between the radially inner surface and the radially outer surface of the first stator stack.

The radially inner surface is located closer to the rotary axis of the generator than the radially outer axis.

According to a further exemplary embodiment, the second stator stack is a stack as described above. The second stator stack may thus also comprise a respective intermediate lamination sheet comprising a respective cut-out, wherein the intermediate lamination sheet is located between a respective first and a respective second lamination sheet.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a perspective view of a part of a stator according to an exemplary embodiment of the present invention;
Fig. 2 shows a schematical view of a stator stack according to an exemplary embodiment of the present invention;
Fig. 3 and Fig. 4 show intermediate lamination sheets according to an exemplary embodiment of the present invention; and
Fig. 5 shows a schematical view of a first or second lamination sheet according to an exemplary embodiment of the present invention.

### Detailed Description

The illustrations in the drawings are schematical. It is noted that in different figures, similar or identical elements are provided with the same reference signs.

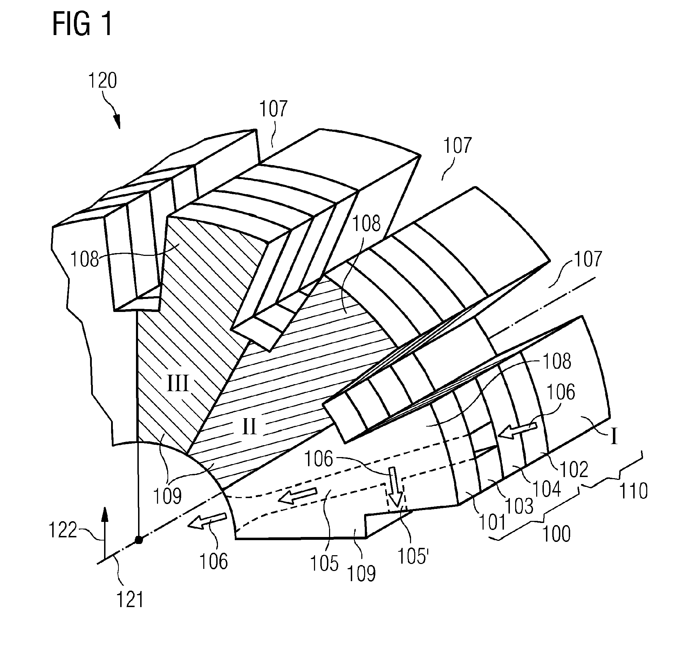

Fig. 1 shows a stator 120 for a generator, in particular a generator for a wind turbine. The stator 120 comprises a first stator stack segment I, a second stator stack segment II and a third stator stack segment III. The respective stator stacks segments I - III are arranged one after another along a circumferential direction for forming the stator 120.

As shown in Fig. 1, the first stator stack segment I comprises a first stator stack 100 and a second stator stack 110 which are arranged one after another along an axial direction of the stator 120.

The axial direction is a direction parallel to the rotary axis 121 of a rotor of the generator. Respectively, the radial direction 122 is a direction running through the rotary axis 121, wherein the radial direction 122 is perpendicular to the rotary axis 121. The circumferential direction describes a direction around the rotary axis 121.

The first stator stack 100 is shown in more detail in Fig. 1. For sake of clarity, the single lamination sheets of the second lamination stack 110 and the lamination sheets of the second stator stack segment II and the third stator stack segment III are not shown in detail. However, the first stator stack segment I, the second stator stack segment II and the third stator stack segment III may comprise a plurality of first stator stacks 100 or second stator stacks 110 according to the present invention, for example. Furthermore, for sake of clarity, Fig. 1 only shows only a section of the stator 120. However, the stator 120 may generally form a closed ring profile.

As shown in Fig. 1 in more detail, the stator 120 comprises a first stator stack 100 and a second stator stack 110 (see stator segment I). The first stator stack 100 and the second stator stack 110 are arranged one after another along the axial direction of the generator. In particular, a tightening bar (not shown) to which the first stator stack 100 and the second stator stack 110 are arranged, tightens the first stator stack 100 and the second stator stack 110 together.

The first stator stack 100 comprises a first lamination sheet 101, a second lamination sheet 102 and a first intermediate lamination sheet 103. The first lamination sheet 101, the first intermediate lamination sheet 103 and the second lamination sheet 102 are attached adjacent to each other along the axial direction of the generator. The first intermediate lamination sheet 103 is arranged between the first lamination sheet 101 and the second lamination sheet 102.

Furthermore, as shown in Fig. 1, a second intermediate lamination sheet 104 may be attached between the first intermediate lamination sheet 103 on the one side and the second lamination sheet 102 on the other side.

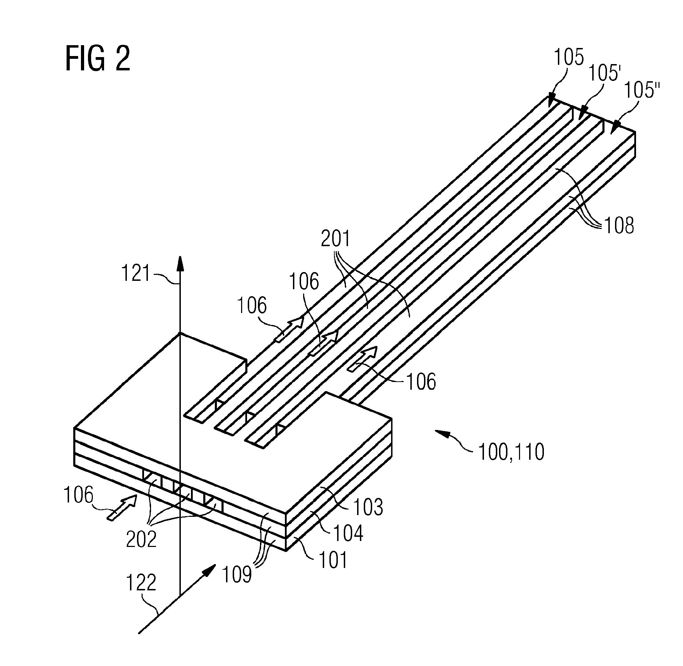

The first intermediate lamination sheets 103 comprise a first cut-out 201 (see in detail in Fig. 2) for forming a cooling channel 105, 105' (shown in Fig. 1 with the dotted lines) between the first lamination sheet 101 and the second lamination sheet 102 such that the cooling fluid is guidable through the cooling channel 105, 105'.

In particular as shown in Fig. 1, the cooling channel 105, 105' is enveloped by the first lamination sheet 101, the second lamination sheet 102 and the first intermediate lamination sheet 103.

As shown in Fig. 1, the cooling channels 105, 105' are formed by cut-outs 201, 202 of the first and second intermediate lamination sheets 103, 104 without using spacers. The cut-outs 201, 202 may be formed integrally in the respective intermediate lamination sheets 103, 104 in such a way that the cooling fluid streams from a radially outer surface of the stator 120 to a radially inner surface of the stator 120 or vice versa. As exemplary shown by the arrows 106 in Fig. 1, the cooling fluid may flow from the radially outer surface of the stator 120 through the cooling channel 105, 105' in a direction to a radially inner surface of the stator.

Furthermore, the lamination sheets 101, 102, 103, 104 may form one or more circumferentially spaced fin sections 108 which extend along a radial direction from a base section 109 such that between adjacent fin sections 108 winding slots 107 are formed e.g. in the radially outer surface of the stator 120. A base section 109 comprises generally a larger circumferential width in comparison to a circumferential width of a respective fin section 108 extending from the base section 109. As exemplary shown in Fig. 1, circumferentially adjacent fin sections 108 of respective stator stack segments I, II, III may form a fin section 108. The windings of the stator 120 may be attached inside the winding slots 107.

For example, the first cut-out 201 may be formed into the first intermediate lamination sheet 103 in such a way that an opening of the cooling channel 105' is formed in the region of the fin section 108. Hence, a proper cooling efficiency of the cooling channel 105' is achieved, because the cooling channel 105' may blow the cooling fluid into the winding slot 107 such that the windings in the winding slot 107 may be cooled efficiently.

Furthermore, for sake of clarity, only the first cut-out 201 is shown in Fig. 1. The first intermediate lamination sheet 103 may comprise also a plurality of first cut-outs 201 for forming a plurality of respective cooling channels 105, 105'. Furthermore, also the second intermediate lamination sheet 104 may comprise second cut-outs 202 (see Fig. 2) and further second cut-outs, for example.

Furthermore, as shown at the radially inner end of the cooling channel 105, the cooling channel formed by the first cut-out 201 may comprise different flow diameters. For example, at a fluid outlet at the radially inner side of the cooling channel 105, an increasing flow diameter is formed for providing a diffusor. Hence, pressure drops of the cooling fluid between the radially inner and outer side may be reduced.

Fig. 2 shows a stator stack 100, 110 according to an exemplary embodiment of the present invention. The first lamination sheet 101 may be a conventional lamination sheet which comprises a homogeneous surface and which does not have any cut-outs or guiding means for guiding the cooling fluid. For a better orientation the rotary axis 121 and the radial direction 122 of the generator are indicated in Fig. 2.

The second intermediate lamination sheet 104 is attached onto an axially facing surface of the first lamination sheet 101. The first intermediate lamination sheet 103 is attached onto an axially facing surface of the second intermediate lamination sheet 104. For a better overview, the second lamination sheet 102 is not shown in Fig. 2 in order to show the respective first cut-outs 201 and the second cut-outs 202.

As shown in the exemplary embodiment of Fig. 2, the first intermediate lamination sheet 103 comprises a plurality of first cut-outs 201, wherein each cut-out 201 forms a respective cooling channel 105, 105', 105" . The cooling channels 105, 105', 105" run generally along the radial direction 122. In particular, the cooling channels 105, 105', 105" run partially along the fin section 108 of the respective lamination sheets 101, 102, 103, 104.

Furthermore, as shown in Fig. 2, the second intermediate lamination sheet 104 comprises second cut-outs 202. The second cut-outs 202 are formed along the radial direction 122, for example. At an overlapping section 203, the first cut-out 201 overlaps with the second cut-outs 202. Hence, both, the second cut-out 202 and the first cut-out 201 forms a respective cooling channel 105, 105', 105" , such that a cooling fluid may partially flow radially along the second cut-out 202 to the overlapping section, next partial axially to the second cut-out 202 in the overlapping section 203 and next further along the first cut-out 201 along the fin section 108 in a radially direction.

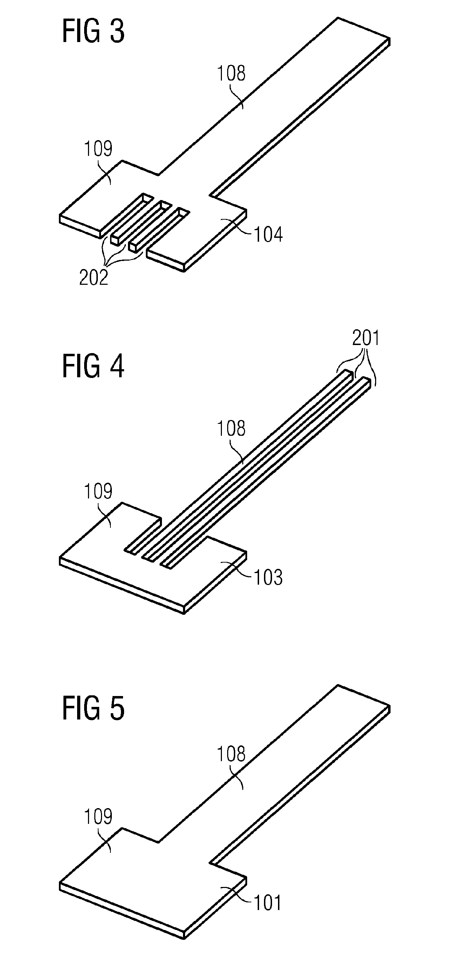

Fig. 3 shows the second intermediate lamination sheet 104 of Fig. 2. As shown in Fig. 3, the second cut-outs 202 are formed into the base section 109 of the second intermediate lamination sheet 104. The fin section 108 of the second intermediate lamination sheet 104 is solid and comprises no further cut-outs.

In Fig. 4, the first intermediate lamination sheet 103 as shown in Fig. 2 is illustrated. The first cut-outs 201 are formed into the fin section 108, wherein the first cut-outs 201 extend partially inside the base section 109 of the first intermediate lamination sheet 103.

Fig. 5 shows the first lamination sheet 101. As can be seen, the first lamination sheet 101 may be a conventional lamination sheet 101 which has no spacers or cut-outs at the fin section 108 or at the base section 109. The first lamination sheet 101 and the second lamination sheet 102 may comprise the same features and shapes, for example.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Stator stack (100, 110) for a stator (120) of a generator, in particular a generator for a wind turbine, the stator stack (100, 110) comprising
a first lamination sheet (101),
a second lamination sheet (102), and
a first intermediate lamination sheet (103),
wherein the first lamination sheet (101), the first intermediate lamination sheet (103) and the second lamination sheet (102) are attached adjacent to each other along an axial direction of the generator,
wherein the first intermediate lamination sheet (103) is arranged between the first lamination sheet (101) and the second lamination sheet (102), and
wherein the first intermediate lamination sheet (103) comprises a first cut-out (201) for forming a cooling channel (105, 105',105") between the first lamination sheet (101) and the second lamination sheet (102) such that a cooling fluid is guidable through the cooling channel (105, 105', 105").

2. Stator stack (100, 110) according to claim 1,
wherein the first intermediate lamination sheet (103) comprises a plurality of first cut-outs (201) for forming a plurality of respective cooling channels (105, 105', 105") such that the cooling fluid is guidable through each of the plurality of respective cooling channels (105, 105', 105").

3. Stator stack (100, 110) according to claim 1 or 2,
wherein the first cut-out (201) is formed such that a flow diameter at a first cross section of the cooling channel (105, 105', 105") differs from a further flow diameter at a second cross section of the cooling channel (105, 105', 105"),
wherein the first cross section is spaced from the second cross section.

4. Stator stack (100, 110) according to one of the claims 1 to 3, further comprising
a second intermediate lamination sheet (104),
wherein the second intermediate lamination sheet (104) is arranged between the first intermediate lamination sheet (103) and the first lamination sheet (101).

5. Stator stack (100, 110) according to claim 4,
wherein the second intermediate lamination sheet (104) comprises a second cut-out (202) for forming the cooling channel (105, 105', 105") such that the cooling fluid is guidable through the cooling channel (105, 105', 105").

6. Stator stack (100, 110) according to claim 4 or 5,
wherein the second intermediate lamination sheet (104) comprises a further second cut-out for forming a further cooling channel such that a further cooling fluid is guidable through the further cooling channel.

7. Stator (120) for a generator, in particular a generator for a wind turbine, the stator (120) comprising
a first stator stack (100) which is a stator stack according to one of the claims 1 to 6,
a second stator stack (110),
wherein the first stator stack (100) and the second stator stack (110) are arranged one after another along the axial direction of the generator,
a tightening bar to which the first stator stack (100) and the second stator stack (110) are arranged,
wherein the first stator stack (100) and the second stator stack (110) are tightened together by the tightening bar.

8. Stator stack according to claim 7,
wherein the first stator stack (100) has a radially outer surface and a radially inner surface,
wherein the first cut-out (201) for forming the cooling channel (105, 105', 105") is formed in such a way that a cooling fluid is guidable between the radially inner surface and the radially outer surface.

9. Stator (120) according to claim 7 or 8,
wherein the second stator stack (110) is a stator stack according to one of the claims 1 to 6.

10. Method of operating a generator comprising a stator (120) of one of the claims 7 to 9, the method comprising
guiding a cooling fluid through the cooling channel (105, 105', 105") which is formed by the first cut-out (201) of the first intermediate lamination sheet (103).
